# EUROPÄISCHE PATENTANMELDUNG

(11) **EP 4 357 649 A1**
(43) Veröffentlichungstag der Anmeldung: **24.04.2024**
(21) Anmeldenummer: 23203721.8
(22) Anmeldetag: 16.10.2023
(51) Int. Cl.: F16K 11/00, E03C 1/042

(54) **SANITÄRARMATUREN MIT KUNSTSTOFFWASSERFÜHRUNGEN**

(30) Priorität: 19.10.2022 DE 102022127600
(71) Anmelder: Grohe AG, 58675 Hemer (DE)
(72) Erfinder: WOESTHOFF, Wulf, 58675 Hemer (DE)

(57) **Zusammenfassung**

Sanitärarmatur (1), zumindest aufweisend:
- ein Armaturengehäuse (2) mit einem Warmwasserzulauf für Warmwasser (3), einem Kaltwasserzulauf (4) für Kaltwasser und zumindest einem Ablauf (5);
- eine erste Kunststoffwasserführung (6), mit der das Warmwasser ohne Kontakt zu dem Armaturengehäuse (2) zumindest teilweise von dem Warmwasserzulauf (3) zu dem zumindest einen Ablauf (5) führbar ist;
- eine zweite Kunststoffwasserführung (7), mit der das Kaltwasser ohne Kontakt zu dem Armaturengehäuse (2) zumindest teilweise von dem Kaltwasserzulauf (4) zu dem zumindest einen Ablauf (5) führbar ist;
- ein Warmwasserventil (8), das zumindest teilweise in der ersten Kunststoffwasserführung (6) angeordnet ist;
- ein Kaltwasserventil (9), das zumindest teilweise in der zweiten Kunststoffwasserführung (7) angeordnet ist;
wobei die erste Kunststoffwasserführung (6) und die zweite Kunststoffwasserführung (7) verstellbar zueinander ausgebildet sind, sodass diese an einen ersten Abstand (10) zwischen dem Warmwasserzulauf (3) und Kaltwasserzulauf (4) anpassbar sind.

## Beschreibung

Die vorliegende Erfindung betrifft eine Sanitärarmatur. Sanitärarmaturen dienen insbesondere der bedarfsgerechten Abgabe einer Flüssigkeit, insbesondere Wasser, an einem Waschbecken, einem Spülbecken, einer Dusche und/oder einer Badewanne.

Sanitärarmaturen können ein Armaturengehäuse mit einem Warmwasserzulauf für Warmwasser, einem Kaltwasserzulauf für Kaltwasser und einem Ablauf aufweisen. Der Warmwasserzulauf und der Kaltwasserzulauf sind jeweils über zumindest einen Flüssigkeitskanal mit dem Ablauf verbunden, sodass das Warmwasser von dem Warmwasserzulauf und das Kaltwasser von dem Kaltwasserzulauf zu dem Ablauf strömen können. Da das Warmwasser und Kaltwasser dabei mit dem Armaturengehäuse in Kontakt stehen, müssen Armaturengehäuse aus einem für Trinkwasser geeigneten und nicht-korrosionsanfälligen Material, wie zum Beispiel Messing, bestehen.

Um kostengünstigere Materialien für Armaturengehäuse verwenden zu können, sind bereits Sanitärarmaturen bekannt, bei denen die Flüssigkeitskanäle in dem Armaturengehäuse mit Kunststoff beschichtet sind. Zudem können die Flüssigkeitskanäle zumindest teilweise durch Kunststoffwasserführungen gebildet werden, die einen Kontakt des Warmwassers und Kaltwassers mit dem Armaturengehäuse verhindern. Für verschiedene Länder sind Sanitärarmaturen erforderlich, bei denen ein Abstand zwischen dem Warmwasserzulauf und Kaltwasserzulauf des Armaturengehäuses an einen dort üblichen Abstand zwischen einem entsprechenden Warmwasseranschluss und Kaltwasseranschluss eines Gebäudes angepasst ist. Dementsprechend sind angepasste Kunststoffwasserführungen erforderlich, was zu einer hohen Variantenvielfalt und hohen Herstellungskosten führt.

Aufgabe der Erfindung ist es daher, die mit Bezug auf den Stand der Technik geschilderten Probleme zumindest teilweise zu lösen und insbesondere eine Sanitärarmatur anzugeben, durch die die Variantenvielfalt der Kunststoffwasserführungen reduzierbar ist.

Diese Aufgabe wird gelöst mit einer Sanitärarmatur gemäß den Merkmalen des unabhängigen Patentanspruchs. Weitere vorteilhafte Ausgestaltungen der Erfindung sind in den abhängig formulierten Patentansprüchen angegeben. Es ist darauf hinzuweisen, dass die in den abhängig formulierten Patentansprüchen einzeln aufgeführten Merkmale in beliebiger technologisch sinnvoller Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Hierzu trägt eine Sanitärarmatur bei, die zumindest Folgendes aufweist:
- ein Armaturengehäuse mit einem Warmwasserzulauf für Warmwasser, einem Kaltwasserzulauf für Kaltwasser und zumindest einem Ablauf;
- eine erste Kunststoffwasserführung, mit der das Warmwasser ohne Kontakt zu dem Armaturengehäuse zumindest teilweise von dem Warmwasserzulauf zu dem zumindest einen Ablauf führbar ist;
- eine zweite Kunststoffwasserführung, mit der das Kaltwasser ohne Kontakt zu dem Armaturengehäuse zumindest teilweise von dem Kaltwasserzulauf zu dem zumindest einen Ablauf führbar ist;
- ein Warmwasserventil, das zumindest teilweise in der ersten Kunststoffwasserführung angeordnet ist;
- ein Kaltwasserventil, das zumindest teilweise in der zweiten Kunststoffwasserführung angeordnet ist;
wobei die erste Kunststoffwasserführung und die zweite Kunststoffwasserführung verstellbar zueinander ausgebildet sind, sodass diese an einen ersten Abstand zwischen dem Warmwasserzulauf und Kaltwasserzulauf anpassbar sind.

Die Sanitärarmatur dient insbesondere einer (bedarfsgerechten) Abgabe einer Flüssigkeit an einem Spülbecken, einem Waschbecken, einer Dusche und/oder einer Badewanne. Insbesondere kann die Sanitärarmatur nach Art einer Küchenarmatur, einer Duscharmatur oder einer Badewannenarmatur ausgebildet sein. Bei der Flüssigkeit kann es sich insbesondere um (Trink-) Wasser, Warmwasser, Kaltwasser und/oder Mischwasser handeln. Die Sanitärarmatur kann für eine Trinkwasserinstallation eines Gebäudes vorgesehen sein.

Die Sanitärarmatur weist ein Armaturengehäuse mit einem Warmwasserzulauf für Warmwasser, einem Kaltwasserzulauf für Kaltwasser und zumindest einem Ablauf auf. Der Warmwasserzulauf kann mit einem Warmwasseranschluss des Gebäudes und der Kaltwasserzulauf mit einem Kaltwasseranschluss des Gebäudes, beispielsweise über Schraubverbindungen, verbindbar sein. Der Warmwasserzulauf kann eine (erste) Befestigungsmutter zur Befestigung des Warmwasserzulaufs an dem Warmwasseranschluss und/oder der Kaltwasserzulauf eine (zweite) Befestigungsmutter zur Befestigung des Kaltwasserzulaufs an dem Kaltwasseranschluss aufweisen. Der Warmwasseranschluss und/oder der Kaltwasseranschluss können, insbesondere starr, aus einer Wand des Gebäudes ragen. Über den Warmwasserzulauf ist die Sanitärarmatur insbesondere mit einer Warmwasserquelle, beispielsweise nach Art eines Boilers oder einer Zentralheizung, verbindbar. Über den Kaltwasserzulauf ist die Sanitärarmatur insbesondere mit einer Kaltwasserquelle, beispielsweise nach Art eines (öffentlichen) Wasserversorgungsnetzes, verbindbar. Das Kaltwasser kann eine Kaltwassertemperatur aufweisen, die insbesondere maximal 25 °C [Celsius], bevorzugt 1 °C bis 25 °C, besonders bevorzugt 5 °C bis 20 °C beträgt. Das Warmwasser kann eine Warmwassertemperatur aufweisen, die insbesondere maximal 90 °C, bevorzugt 25 °C bis 90 °C, besonders bevorzugt 55 °C bis 65 °C, beträgt. Der Warmwasserzulauf und der Kaltwasserzulauf bzw. eine Warmwasserzulauflängsachse des Warmwasserzulaufs und eine Kaltwasserzulauflängsachse des Kaltwasserzulaufs können parallel zueinander ausgebildet sein. Bei der Warmwasserzulauflängsachse kann es sich um eine Zentrumsachse des Warmwasserzulaufs und/oder bei der Kaltwasserzulauflängsachse um eine Zentrumsachse des Kaltwasserzulaufs handeln.

Über den zumindest einen Ablauf ist die Flüssigkeit, insbesondere das Warmwasser und/oder Kaltwasser, insbesondere von der Sanitärarmatur abgebbar. Der zumindest eine Ablauf kann auf einer Oberseite des Armaturengehäuses und/oder Unterseite des Armaturengehäuses ausgebildet sein. Beispielsweise kann ein erster Ablauf auf der Oberseite des Armaturengehäuses und/oder ein zweiter Ablauf auf der Unterseite des Armaturengehäuses ausgebildet sein. Der zumindest eine Ablauf kann in einem zentralen Bereich des Armaturengehäuses und/oder in einem Zentrum des Armaturengehäuses ausgebildet sein. Der zumindest eine Ablauf kann nach Art eines Ablaufrohrs ausgebildet sein. Der zumindest eine Ablauf kann starr oder bewegbar, insbesondere verschwenkbar und/oder zumindest teilweise ausziehbar, an dem Armaturengehäuse ausgebildet sein. Der zumindest eine Ablauf kann zumindest eine Auslauföffnung aufweisen und/oder nach Art zumindest einer Auslauföffnung ausgebildet sein. Über die zumindest eine Auslauföffnung kann die Flüssigkeit, insbesondere das Warmwasser und/oder Kaltwasser, an eine Umgebung der Sanitärarmatur abgebbar sein. Über den zumindest einen Ablauf kann die Sanitärarmatur mit zumindest einer Abgabeeinrichtung zur Abgabe der Flüssigkeit an die Umgebung verbindbar sein. Bei der Umgebung kann es sich beispielsweise um einen Bereich des Waschbeckens, des Spülbeckens, der Dusche und/oder der Badewanne handeln. Bei der Abgabeeinrichtung kann es sich beispielsweise um folgende Typen handeln: Brause, Kopfbrause, Handbrause, Seitenbrause, Strahlbildner, Düse, Auslauföffnung und/oder Mousseur. Die Abgabeeinrichtung kann über eine Verbindungsleitung mit dem zumindest einen Ablauf verbindbar sein. Die Verbindungsleitung kann zumindest teilweise nach Art einer Schlauchleitung und/oder Rohrleitung ausgebildet sein.

Das Armaturengehäuse kann zumindest teilweise rohrförmig, nach Art eines Hohlkörpers und/oder nach Art eines Grundkörpers ausgebildet sein. Das Armaturengehäuse kann an einem Träger, beispielsweise der Wand des Gebäudes, befestigbar sein. Das Armaturengehäuse kann mehrteilig ausgebildet sein und/oder einen (lösbaren bzw. entfernbaren) Deckel aufweisen. Mit dem Deckel kann eine Montageöffnung des Armaturengehäuses abdeckbar sein, über die insbesondere ein Innenraum bzw. Montageraum des Armaturengehäuses zugänglich ist. Die Montageöffnung kann sich zumindest teilweise über eine Rückseite des Armaturengehäuses erstrecken. Die Rückseite des Armaturengehäuses weist im Betrieb der Sanitärarmatur insbesondere in Richtung des Trägers oder der Wand des Gebäudes. Das Armaturengehäuse kann eine dekorative äußere Oberfläche aufweisen. Beispielsweise kann die äußere Oberfläche verchromt sein.

Das Armaturengehäuse kann zumindest teilweise oder vollständig aus einer Zinklegierung bestehen. Bei der Zinklegierung handelt es sich insbesondere um eine Metalllegierung, deren Hauptbestandteil bzw. Basismetall Zink (Zn) ist. Dies kann insbesondere bedeuten, dass Zink im Vergleich zu den übrigen Legierungsbestandteilen der Zinklegierung den größten Massenanteil aufweist. Die Zinklegierung kann Zink mit einem Massenanteil von mehr als 80 % aufweisen. Insbesondere kann die Zinklegierung Zink mit einem Massenanteil von mehr als 90 % oder 95 % aufweisen. Die Zinklegierung bzw. das Zink weist im Vergleich zu Kupfer oder einer Kupferlegierung, wie zum Beispiel Messing, eine unterschiedliche Kristallstruktur auf, nämlich hexagonal statt kubisch-flächenzentriert. Bei der Zinklegierung kann es sich insbesondere um eine sogenannte Zamak-Legierung handeln. Als weitere Legierungsbestandteile kann die Zinklegierung beispielsweise zumindest Aluminium (Al), Magnesium (Mg) und/oder Kupfer (Cu) umfassen. Insbesondere kann die Zinklegierung folgende Massenanteile von Legierungsbestandteilen umfassen:
a) 3,8 - 4,2 % Al, 0,035 - 0,06 % Mg, Rest (insbesondere) Zn (Zamak-Legierung ZL0400),
b) 3,8 - 4,2 % Al, 0,7 - 1,1 % Cu, 0,035 - 0,06 % Mg, Rest (insbesondere) Zn (Zamak-Legierung ZL0410) oder
c) 3,8 - 4,2 % Al, 2,7 - 3,3 % Cu, 0,035 - 0,06 % Mg, Rest (insbesondere) Zn (Zamak-Legierung ZL0430).

Das Armaturengehäuse kann durch ein Zinkdruckgussverfahren hergestellt sein. Bei dem Zinkdruckgussverfahren wird insbesondere eine flüssige Schmelze der Zinklegierung unter Druck in eine Druckgussform gedrückt. Nach einem Erstarren der Schmelze kann das Armaturengehäuse entformt und ggf. mechanisch bearbeitet werden. Bei dem Armaturengehäuse handelt es sich daher insbesondere um ein Zinkdruckgussteil.

Die Sanitärarmatur umfasst eine erste Kunststoffwasserführung, die insbesondere in dem Armaturengehäuse, in dem Innenraum des Armaturengehäuses oder in dem Montageraum des Armaturengehäuses angeordnet ist. Die erste Kunststoffwasserführung besteht zumindest teilweise aus Kunststoff und/oder ist nach Art eines Kunststoffspritzgussteils ausgebildet. Die erste Kunststoffwasserführung ist insbesondere nicht nach Art eines (flexiblen) Schlauchs ausgebildet. Die erste Kunststoffwasserführung kann zumindest teilweise rohrförmig ausgebildet sein. Die erste Kunststoffwasserführung kann einen Warmwassereinlass für das Warmwasser aufweisen. Der Warmwassereinlass der ersten Kunststoffwasserführung ist insbesondere in dem Warmwasserzulauf des Armaturengehäuses angeordnet und/oder fluchtet mit dem Warmwasserzulauf des Armaturengehäuses. Der Warmwassereinlass der ersten Kunststoffwasserführung kann koaxial zu dem Warmwasserzulauf des Armaturengehäuses ausgebildet sein. Der Warmwassereinlass der ersten Kunststoffwasserführung kann den Warmwasserzulauf des Armaturengehäuses zumindest teilweise bilden. Insbesondere kann eine Warmwassereinlasslängsachse des Warmwassereinlasses mit einer Warmwasserzulauflängsachse des Warmwasserzulaufs fluchten bzw. koaxial zu dieser verlaufen. Bei der Warmwassereinlasslängsachse kann es sich um eine Zentrumsachse des Warmwassereinlasses handeln.

Durch die erste Kunststoffwasserführung ist das Warmwasser ohne Kontakt zu dem Armaturengehäuse zumindest teilweise von dem Warmwasserzulauf zu dem zumindest einen Ablauf führbar. Die erste Kunststoffwasserführung bildet insbesondere zumindest teilweise einen ersten Flüssigkeitskanal, sodass ein Kontakt der Flüssigkeit bzw. des Warmwassers mit dem Armaturengehäuse zumindest teilweise durch die erste Kunststoffwasserführung verhinderbar ist. Dies kann beispielsweise bedeuten, dass der zumindest eine erste Flüssigkeitskanal sich zumindest teilweise durch die erste Kunststoffwasserführung erstreckt und/oder die erste Kunststoffwasserführung den zumindest einen ersten Flüssigkeitskanal zumindest teilweise begrenzt. Die zumindest eine erste Kunststoffwasserführung kann sich zumindest teilweise von dem Warmwasserzulauf zu dem zumindest einen Ablauf erstrecken. Die erste Kunststoffwasserführung kann einen Warmwasserauslass aufweisen. Der Warmwasserauslass und/oder eine Warmwasserauslasslängsachse des Warmwasserauslasses können orthogonal zu dem Warmwassereinlass der ersten Kunststoffwasserführung und/oder orthogonal zu der Warmwassereinlasslängsachse des Warmwassereinlasses der ersten Kunststoffwasserführung ausgerichtet sein. Bei der Warmwasserauslasslängsachse kann es sich um eine Zentrumsachse des Warmwasserauslasses handeln.

Die Sanitärarmatur umfasst eine zweite Kunststoffwasserführung, die insbesondere in dem Armaturengehäuse, in dem Innenraum des Armaturengehäuses oder in dem Montageraum des Armaturengehäuses angeordnet ist. Die zweite Kunststoffwasserführung besteht zumindest teilweise aus Kunststoff und/oder ist nach Art eines Kunststoffspritzgussteils ausgebildet. Die zweite Kunststoffwasserführung ist insbesondere nicht nach Art eines (flexiblen) Schlauchs ausgebildet. Die zweite Kunststoffwasserführung kann zumindest teilweise rohrförmig ausgebildet sein. Die erste Kunststoffwasserführung kann einen Kaltwassereinlass für das Kaltwasser aufweisen. Der Kaltwassereinlass der zweiten Kunststoffwasserführung ist insbesondere in dem Kaltwasserzulauf des Armaturengehäuses angeordnet und/oder fluchtet mit dem Kaltwasserzulauf des Armaturengehäuses. Der Kaltwassereinlass der zweiten Kunststoffwasserführung kann koaxial zu dem Kaltwasserzulauf des Armaturengehäuses ausgebildet sein. Der Kaltwassereinlass der zweiten Kunststoffwasserführung kann den Kaltwasserzulauf des Armaturengehäuses zumindest teilweise bilden. Insbesondere kann eine Kaltwassereinlasslängsachse des Kaltwassereinlasses mit einer Kaltwasserzulauflängsachse des Kaltwasserzulaufs fluchten bzw. koaxial zu dieser verlaufen.

Durch die zweite Kunststoffwasserführung ist das Kaltwasser ohne Kontakt zu dem Armaturengehäuse zumindest teilweise von dem Kaltwasserzulauf zu dem zumindest einen Ablauf führbar. Die zweite Kunststoffwasserführung bildet insbesondere zumindest teilweise einen zweiten Flüssigkeitskanal, sodass ein Kontakt der Flüssigkeit des Kaltwassers mit dem Armaturengehäuse zumindest teilweise durch die zweite Kunststoffwasserführung verhinderbar ist. Dies kann beispielsweise bedeuten, dass der zumindest eine zweite Flüssigkeitskanal sich zumindest teilweise durch die zweite Kunststoffwasserführung erstreckt und/oder die zweite Kunststoffwasserführung den zumindest einen zweiten Flüssigkeitskanal zumindest teilweise begrenzt. Die zumindest eine zweite Kunststoffwasserführung kann sich zumindest teilweise von dem Kaltwasserzulauf zu dem zumindest einen Ablauf erstrecken. Die zweite Kunststoffwasserführung kann einen Kaltwasserauslass aufweisen. Der Kaltwasserauslass und/oder eine Kaltwasserauslasslängsachse des Kaltwasserauslassrohrs können orthogonal zu dem Kaltwassereinlass der zweiten Kunststoffwasserführung und/oder orthogonal zu der Kaltwassereinlasslängsachse des Kaltwassereinlasses der zweiten Kunststoffwasserführung ausgerichtet sein. Der Warmwasserauslass der ersten Kunststoffwasserführung und der Kaltwasserauslass der zweiten Kunststoffwasserführung können sich gegenüberliegen. Die Warmwasserauslasslängsachse des Warmwasserauslasses kann koaxial zu der Kaltwasserauslasslängsachse des Kaltwasserauslassrohrs verlaufen. Der Warmwassereinlass der ersten Kunststoffwasserführung und der Kaltwassereinlass der zweiten Kunststoffwasserführung bzw. die Warmwassereinlasslängsachse des Warmwassereinlasses und die Kaltwassereinlasslängsachse des Kaltwassereinlasses können parallel zueinander verlaufen.

Die Sanitärarmatur umfasst ein Warmwasserventil, das zumindest teilweise in der ersten Kunststoffwasserführung angeordnet ist. Das Warmwasserventil kann nach Art eines Absperrventils und/oder Ventiloberteils ausgebildet sein. Durch das Warmwasserventil ist insbesondere ein erster Volumenstrom des Warmwassers, des durch den zumindest einen ersten Flüssigkeitskanal strömenden Warmwassers und/oder des über den zumindest einen Ablauf abgegebenen Warmwassers steuerbar. Das Warmwasserventil kann ein erstes Betätigungselement aufweisen, mit dem das Warmwasserventil durch einen Benutzer der Sanitärarmatur insbesondere zwischen einer Schließstellung und Offenstellung verstellbar ist. In der Schließstellung des Warmwasserventils kann insbesondere kein Warmwasser durch die erste Kunststoffwasserführung fließen. Das erste Betätigungselement kann beispielsweise nach Art eines Betätigungsgriffs oder Drehgriffs ausgebildet sein. Das erste Betätigungselement kann beispielsweise um eine erste Drehachse drehbar sein. Die erste Drehachse kann mit der Warmwasserzulauflängsachse und/oder der Warmwassereinlasslängsachse fluchten. Das Warmwasserventil kann zumindest teilweise in einer (starren) Warmwasserventilaufnahme des Armaturengehäuses angeordnet und/oder, beispielsweise mithilfe einer Schraubverbindung, befestigt sein. Die Warmwasserventilaufnahme kann auf einer Vorderseite des Armaturengehäuses ausgebildet sein und/oder ist insbesondere nicht verstellbar oder bewegbar. Das Warmwasserventil ist insbesondere nicht nach Art eines Mischventils ausgebildet. Die erste Kunststoffwasserführung kann einen ersten Ventilsitz für einen ersten Ventilkörper des Warmwasserventils aufweisen. Der erste Ventilsitz kann beispielsweise nach Art einer, insbesondere ringförmigen, Dichtfläche ausgebildet sein.

Die Sanitärarmatur umfasst ein Kaltwasserventil, das zumindest teilweise in der zweiten Kunststoffwasserführung angeordnet ist. Das Kaltwasserventil kann nach Art eines Absperrventils und/oder Ventiloberteils ausgebildet sein. Durch das Kaltwasserventil ist insbesondere ein zweiter Volumenstrom des Kaltwassers, des durch den zumindest einen zweiten Flüssigkeits-kanal strömenden Kaltwassers und/oder des über den zumindest einen Ablauf abgegebenen Kaltwassers steuerbar. Das Kaltwasserventil kann ein zweites Betätigungselement aufweisen, mit dem das Kaltwasserventil durch den Benutzer der Sanitärarmatur insbesondere zwischen einer Schließstellung und Offenstellung verstellbar ist. In der Schließstellung des Kaltwasserventils kann insbesondere kein Kaltwasser durch die zweite Kunststoffwasserführung fließen. Das zweite Betätigungselement kann beispielsweise nach Art eines Betätigungsgriffs oder Drehgriffs ausgebildet sein. Das zweite Betätigungselement kann beispielsweise um eine zweite Drehachse drehbar sein. Die zweite Drehachse kann mit der Kaltwasserzulauflängsachse und/oder der Kaltwassereinlasslängsachse fluchten. Das Kaltwasserventil kann zumindest teilweise in einer (starren) Kaltwasserventilaufnahme des Armaturengehäuses angeordnet und/oder, beispielsweise mithilfe einer Schraubverbindung, befestigt sein. Die Kaltwasserventilaufnahme kann auf der Vorderseite des Armaturengehäuses ausgebildet sein und/oder ist insbesondere nicht verstellbar oder bewegbar. Das Kaltwasserventil ist insbesondere nicht nach Art eines Mischventils ausgebildet. Durch das Warmwasserventil und Kaltwasserventil sind der Volumenstrom des Warmwassers und Kaltwassers unabhängig voneinander steuerbar. Die zweite Kunststoffwasserführung kann einen zweiten Ventilsitz für einen zweiten Ventilkörper des Kaltwasserventils aufweisen. Der zweite Ventilsitz kann beispielsweise nach Art einer, insbesondere ringförmigen, Dichtfläche ausgebildet sein.

Die erste Kunststoffwasserführung und die zweite Kunststoffwasserführung sind verstellbar zueinander ausgebildet, sodass diese an einen ersten Abstand zwischen dem Warmwasserzulauf und Kaltwasserzulauf anpassbar sind. Der erste Abstand kann sich beispielsweise zwischen der Warmwasserzulauflängsachse und Kaltwasserzulauflängsachse bemessen. Der erste Abstand kann beispielsweise 100 mm [Millimeter] bis 200 mm, bevorzugt 120 mm bis 160 mm, betragen. Die erste Kunststoffwasserführung und die zweite Kunststoffwasserführung sind insbesondere derart verstellbar, dass der Warmwassereinlass in dem Warmwasserzulauf und der Kaltwassereinlass in dem Kaltwasserzulauf anordenbar sind. Die erste Kunststoffwasserführung und die zweite Kunststoffwasserführung können relativ zueinander verschiebbar und/oder teleskopierbarsein. Die erste Kunststoffwasserführung und die zweite Kunststoffwasserführung können verstellbar zueinander miteinander verbunden sein. Insbesondere sind die erste Kunststoffwasserführung und die zweite Kunststoffwasserführung vor ihrer Montage in dem Armaturengehäuse zueinander verstellbar, sodass diese (gemeinsam) in einer zu dem ersten Abstand geeigneten Ausrichtung und/oder Einstellung in dem Armaturengehäuse anordenbar sind. Die Verstellbarkeit der ersten Kunststoffwasserführung und der zweiten Kunststoffwasserführung ermöglicht eine Anpassung der ersten Kunststoffwasserführung und zweiten Kunststoffwasserführung an unterschiedliche erste Abstände zwischen dem Warmwasserzulauf und Kaltwasserzulauf des Armaturengehäuses. Somit sind für Armaturengehäuse mit unterschiedlichen ersten Abständen zwischen dem Warmwasserzulauf und Kaltwasserzulauf keine unterschiedlichen Wasserführungen erforderlich, wodurch eine Variantenvielfalt der Kunststoffwasserführungen reduzierbar ist.

Ein zweiter Abstand zwischen einem Warmwassereinlass der ersten Kunststoffwasserführung und einem Kaltwassereinlass der zweiten Kunststoffwasserführung kann an den ersten Abstand anpassbar sein. Der zweite Abstand kann sich insbesondere zwischen der Warmwassereinlasslängsachse und der Kaltwassereinlasslängsachse bemessen. Der zweite Abstand ist insbesondere derart an den ersten Abstand anpassbar, dass der zweite Abstand dem Abstand entspricht.

Der Warmwassereinlass kann mit dem Warmwasserzulauf und/oder der Kaltwassereinlass mit dem Kaltwasserzulauf fluchten.

Die Sanitärarmatur kann eine dritte Kunststoffwasserführung aufweisen, mit der das Warmwasser und das Kaltwasser zumindest teilweise zu dem zumindest einen Ablauf führbar sind, wobei die erste Kunststoffwasserführung über eine erste Schiebeverbindung mit der dritten Kunststoffwasserführung und die zweite Kunststoffwasserführung über eine zweite Schiebeverbindung mit der dritten Kunststoffwasserführung verbunden sind. Die dritte Kunststoffwasserführung besteht zumindest teilweise aus Kunststoff und/oder ist nach Art eines Kunststoffspritzgussteils ausgebildet. Die dritte Kunststoffwasserführung kann zumindest teilweise rohrförmig ausgebildet sein. Die dritte Kunststoffwasserführung ist insbesondere nicht nach Art eines (flexiblen) Schlauchs ausgebildet. Die dritte Kunststoffwasserführung kann insbesondere in dem zentralen Bereich und/oder dem Zentrum des Armaturengehäuses angeordnet sein. Das Warmwasser und Kaltwasser können sich in der dritten Kunststoffwasserführung zu Mischwasser mischen. Die dritte Kunststoffwasserführung kann zumindest eine Ablauföffnung für das Warmwasser, das Kaltwasser und/oder das Mischwasser aufweisen. Die zumindest eine Ablauföffnung kann zumindest teilweise in dem zumindest einen Ablauf des Armaturengehäuses angeordnet sein und/oder zumindest teilweise den zumindest einen Ablauf des Armaturengehäuses bilden. Die zumindest eine Ablauföffnung kann mit dem zumindest einen Ablauf fluchten. Die zumindest eine Ablauföffnung kann in einer Seitenwand der dritten Kunststoffwasserführung ausgebildet sein. Die dritte Kunststoffwasserführung kann die erste Kunststoffwasserführung mit der zweiten Kunststoffwasserführung verbinden.

Durch die erste Schiebeverbindung ist die erste Kunststoffwasserführung gegenüber der dritten Kunststoffwasserführung verstellbar. Durch die zweite Schiebeverbindung ist die zweite Kunststoffwasserführung gegenüber der dritten Kunststoffwasserführung verstellbar. Die erste Schiebeverbindung und/oder die zweite Schiebeverbindung sind insbesondere derart ausgebildet, dass über die erste Schiebeverbindung und/oder die zweite Schiebeverbindung keine Flüssigkeit in das Armaturengehäuse austreten kann. Die erste Schiebeverbindung kann nach Art eines ersten Schiebesitzes und/oder die zweite Schiebeverbindung nach Art eines zweiten Schiebesitzes ausgebildet sein. Die dritte Kunststoffwasserführung kann eine erste Wasserführungsaufnahme für die erste Kunststoffwasserführung und eine zweite Wasserführungsaufnahme für die zweite Kunststoffwasserführung aufweisen. Die erste Kunststoffwasserführung ist insbesondere in die erste Wasserführungsaufnahme (linear) einsteckbar und/oder herausziehbar. Die zweite Kunststoffwasserführung ist insbesondere in die zweite Wasserführungsaufnahme (linear) einsteckbar und/oder herausziehbar.

Die erste Kunststoffwasserführung kann zumindest eine erste Lagesicherung und/oder die zweite Kunststoffwasserführung zumindest eine zweite Lagesicherung aufweisen. Durch die zumindest eine erste Lagesicherung ist insbesondere verhinderbar, dass sich eine Position bzw. eine Lage der ersten Kunststoffwasserführung nach ihrer Montage in dem Armaturengehäuse und/oder vor einer Montage des Warmwasserventils ungewollt ändert. Hierdurch kann eine Montage des Warmwasserventil erleichtert werden. Durch die zumindest eine zweite Lagesicherung ist insbesondere verhinderbar, dass sich eine Position bzw. eine Lage der zweite Kunststoffwasserführung nach ihrer Montage in dem Armaturengehäuse und/oder vor einer Montage des Kaltwasserventils ungewollt ändert. Hierdurch kann eine Montage des Kaltwasserventils erleichtert werden.

Die zumindest eine erste Lagesicherung und/oder die zumindest eine zweite Lagesicherung können nach Art zumindest eines Hakens ausgebildet sein. Der zumindest eine Haken kann nach Art eines Schnapphakens ausgebildet sein. Die erste Lagesicherung kann zumindest zwei erste Haken und/oder die zweite Lagesicherung zumindest zwei zweite Haken umfassen.

Das Armaturengehäuse kann zumindest eine erste Rastkontur für die zumindest eine erste Lagesicherung und/oder zumindest eine zweite Rastkontur für die zumindest eine zweite Lagesicherung aufweisen. Die zumindest eine erste Rastkontur und/oder die zumindest eine zweite Rastkontur können an zumindest einer Innenseite des Armaturengehäuses, des Innenraums des Armaturengehäuses und/oder des Montagerahmens des Armaturengehäuses ausgebildet sein.

Die erste Kunststoffwasserführung kann eine erste Aufnahme für das Warmwasserventil und/oder die zweite Kunststoffwasserführung eine zweite Aufnahme für das Kaltwasserventil aufweisen. In der ersten Aufnahme kann insbesondere der erste Ventilsitz und/oder in der zweiten Aufnahme der zweite Ventilsitz ausgebildet sein. Das Warmwasserventil kann sich in die erste Aufnahme und/oder das Kaltwasserventil in die zweite Aufnahme erstrecken.

Das Warmwasserventil kann sich durch das Armaturengehäuse in die erste Kunststoffwasserführung und/oder das Kaltwasserventil sich durch das Armaturengehäuse in die zweite Kunststoffwasserführung erstrecken.

Die erste Kunststoffwasserführung und die zweite Kunststoffwasserführung können spiegelsymmetrisch zueinander ausgebildet sein.

Die Erfindung sowie das technische Umfeld werden nachfolgend anhand der Figuren näher erläutert. Es ist darauf hinzuweisen, dass die Figuren eine besonders bevorzugte Ausführungsvariante der Erfindung zeigen, diese jedoch nicht darauf beschränkt ist. Dabei sind gleiche Bauteile in den Figuren mit denselben Bezugszeichen versehen. Es zeigen schematisch:
- Fig. 1:: eine Sanitärarmatur in einer perspektivischen Darstellung;
- Fig. 2:: die Sanitärarmatur in einer ersten Schnittdarstellung; und
- Fig. 3:: die Sanitärarmatur in einer zweiten Schnittdarstellung.

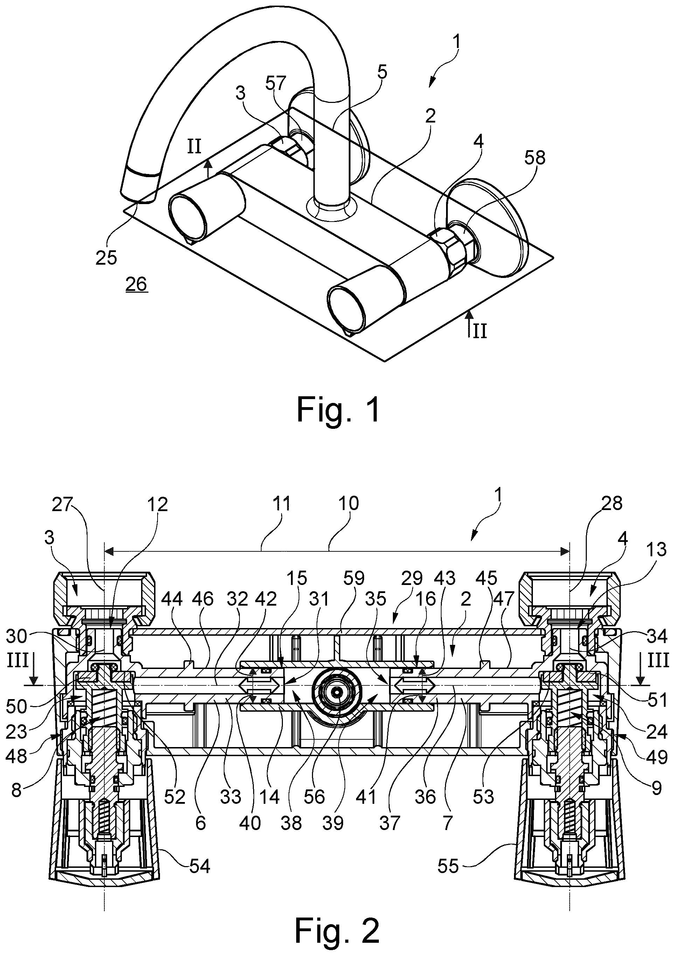

Die Fig. 1 zeigt eine Sanitärarmatur 1 in einer perspektivischen Darstellung. Die Sanitärarmatur 1 umfasst ein Armaturengehäuse 2 mit einem Warmwasserzulauf 3 für Warmwasser, einem Kaltwasserzulauf 4 für Kaltwasser und einem Ablauf 5. Der Warmwasserzulauf 3 ist mit einem Warmwasseranschluss 57 und der Kaltwasserzulauf 4 mit einem Kaltwasseranschluss 58 verbunden, die aus einer hier nicht gezeigten Wand ragen. Der Ablauf 5 ist nach Art eines Ablaufrohrs ausgebildet und weist eine Auslauföffnung 25 auf, über die das Warmwasser und Kaltwasser als Mischwasser an eine Umgebung 26 der Sanitärarmatur 1 abgebbar sind.

Die Fig. 2 zeigt die Sanitärarmatur 1 in einer ersten Schnittdarstellung entlang der in der Fig. 1 dargestellten Schnittebene II-II. Der Warmwasserzulauf 3 ist an einer Rückseite 29 des Armaturengehäuses 2 ausgebildet und weist eine Warmwasserzulauflängsachse 27 auf. Der Kaltwasserzulauf 4 ist an der Rückseite 29 des Armaturengehäuses 2 ausgebildet und weist eine Kaltwasserzulauflängsachse 28 auf. Der Warmwasserzulauf 3 und der Kaltwasserzulauf 4 bzw. die Warmwasserzulauflängsachse 27 und die Kaltwasserzulauflängsachse 28 verlaufen parallel zueinander. Der Warmwasserzulauf 3 der Kaltwasserzulauf 4 bzw. die Warmwasserzulauflängsachse 27 und die Kaltwasserzulauflängsachse 28 weisen einen ersten Abstand 10 auf.

Bei der Montage der Sanitärarmatur 1 werden über die Rückseite 29 eine erste Kunststoffwasserführung 6, eine zweite Kunststoffwasserführung 7 und eine dritte Kunststoffwasserführung 14 in dem Armaturengehäuse 2 angeordnet.

Die erste Kunststoffwasserführung 6 weist einen Warmwassereinlass 12 mit einer Warmwassereinlasslängsachse 30 und einen Warmwasserauslass 31 mit einer Warmwasserauslasslängsachse 32 auf. Der Warmwassereinlass 12 und der Warmwasserauslass 31 bzw. die Warmwassereinlasslängsachse 30 und die Warmwasserauslasslängsachse 32 sind orthogonal zueinander ausgebildet. Der Warmwassereinlass 12 führt entlang der Warmwassereinlasslängsachse 30 zu einer ersten Aufnahme 23 der ersten Kunststoffwasserführung 6 für ein Warmwasserventil 8. Von der ersten Aufnahme 23 erstreckt sich entlang der Warmwasserauslasslängsachse 32 ein Warmwasserauslassrohr 33 zu dem Warmwasserauslass 31.

Die zweite Kunststoffwasserführung 7 weist einen Kaltwassereinlass 13 mit einer Kaltwassereinlasslängsachse 34 und einen Kaltwasserauslass 35 mit einer Kaltwasserauslasslängsachse 36 auf. Der Kaltwassereinlass 13 und der Kaltwasserauslass 35 bzw. die Kaltwassereinlasslängsachse 34 und die Kaltwasserauslasslängsachse 36 sind orthogonal zueinander ausgebildet. Der Kaltwassereinlass 13 führt entlang der Kaltwassereinlasslängsachse 34 zu einer zweiten Aufnahme 24 der zweiten Kunststoffwasserführung 7 für ein Kaltwasserventil 9. Von der zweiten Aufnahme 24 erstreckt sich entlang der Kaltwasserauslasslängsachse 36 ein Kaltwasserauslassrohr 37 zu dem Kaltwasserauslass 35.

Die erste Kunststoffwasserführung 6 ist über eine erste Schiebeverbindung 15 mit der dritten Kunststoffwasserführung 14 und die zweite Kunststoffwasserführung 7 über eine zweite Schiebeverbindung 16 mit der dritten Kunststoffwasserführung 14 verbunden. Hierzu ist das Warmwasserauslassrohr 33 der ersten Kunststoffwasserführung 6 in einer ersten Wasserführungsaufnahme 38 der dritten Kunststoffwasserführung 14 und das Kaltwasserauslassrohr 37 der zweiten Kunststoffwasserführung 7 in einer zweiten Wasserführungsaufnahme 39 der dritten Kunststoffwasserführung 14 angeordnet. Die erste Wasserführungsaufnahme 38 und die zweite Wasserführungsaufnahme 39 fluchten miteinander. Das Warmwasserauslassrohr 33 weist einen ersten Außendurchmesser 40 auf, der (im Wesentlichen) einem ersten Innendurchmesser 42 der ersten Wasserführungsaufnahme 38 entspricht. Das Kaltwasserauslassrohr 37 weist einen zweiten Außendurchmesser 41 auf, der (im Wesentlichen) einem zweiten Innendurchmesser 43 der zweiten Wasserführungsaufnahme 39 entspricht. Die erste Kunststoffwasserführung 6 ist mit ihrem Warmwasserauslassrohr 33 parallel zu der Warmwasserauslasslängsachse 32 bis zu einem ersten Anschlag 44 in die erste Wasserführungsaufnahme 38 der dritten Kunststoffwasserführung 14 einsteckbar. Der erste Anschlag 44 ist an einer ersten Umfangsfläche 46 des Warmwasserauslassrohrs 33 ausgebildet. Die zweite Kunststoffwasserführung 7 ist mit ihrem Kaltwasserauslassrohr 37 parallel zu der Kaltwasserauslasslängsachse 36 bis zu einem zweiten Anschlag 45 in die zweite Wasserführungsaufnahme 39 der dritten Kunststoffwasserführung 14 einsteckbar. Der zweite Anschlag 45 ist an einer zweiten Umfangsfläche 47 des Kaltwasserauslassrohrs 37 ausgebildet.

Durch die erste Schiebeverbindung 15 und die zweite Schiebeverbindung 16 sind die erste Kunststoffwasserführung 6 und die zweite Kunststoffwasserführung 7 derart zueinander verstellbar, dass ein zweiter Abstand 11 zwischen dem Warmwassereinlass 12 der ersten Kunststoffwasserführung 6 und dem Kaltwassereinlass 13 der zweiten Kunststoffwasserführung 7 dem ersten Abstand 10 zwischen dem Warmwasserzulauf 3 des Armaturengehäuses 2 und dem Kaltwasserzulauf 4 des Armaturengehäuses 2 entspricht. Hierdurch fluchten der Warmwasserzulauf 3 mit dem Warmwassereinlass 12 und der Kaltwasserzulauf 4 mit dem Kaltwassereinlass 13.

Nach der Anordnung der ersten Kunststoffwasserführung 6, zweiten Kunststoffwasserführung 7 und dritten Kunststoffwasserführung 14 in dem Armaturengehäuse 2 kann die Rückseite des Armaturengehäuses 2 mit einem Deckel 59 verschlossen und können das Warmwasserventil 8 und das Kaltwasserventil 9 montiert werden. Nach der Montage ist das Warmwasserventil 8 in einer Warmwasserventilaufnahme 48 des Armaturengehäuses 2 angeordnet bzw. befestigt und erstreckt sich in die erste Aufnahme 23 der ersten Kunststoffwasserführung 6. Das Warmwasserventil 8 weist ein erstes Betätigungselement 54 auf, das hier nach Art eines Drehgriffs ausgebildet ist. Über das erste Betätigungselement 54 ist das Warmwasserventil 8 durch einen Benutzer der Sanitärarmatur 1 zwischen einer Schließstellung und einer Offenstellung verstellbar. In der Schließstellung wird ein erster Ventilkörper 50 des Warmwasserventils 8 gegen einen ersten Ventilsitz 52 der ersten Kunststoffwasserführung 6 gepresst, sodass kein Warmwasser durch die erste Kunststoffwasserführung 6 strömen kann. In der Offenstellung wird der erste Ventilkörper 50 von dem ersten Ventilsitz 52 abgehoben, sodass das Warmwasser von dem Warmwassereinlass 12 über die erste Kunststoffwasserführung 6 zu der dritten Kunststoffwasserführung 14 strömen kann.

Das Kaltwasserventil 9 ist in einer Kaltwasserventilaufnahme 49 des Armaturengehäuses 2 angeordnet bzw. befestigt und erstreckt sich in die zweite Aufnahme 24 der zweiten Kunststoffwasserführung 7. Das Kaltwasserventil 9 weist ein zweites Betätigungselement 55 auf, das hier nach Art eines Drehgriffs ausgebildet ist. Über das zweite Betätigungselement 55 ist das Kaltwasserventil 9 durch den Benutzer der Sanitärarmatur 1 zwischen einer Schließstellung und einer Offenstellung verstellbar. In der Schließstellung wird ein zweiter Ventilkörper 51 des Kaltwasserventils 9 gegen einen zweiten Ventilsitz 53 der zweiten Kunststoffwasserführung 7 gepresst, sodass kein Kaltwasser durch die zweite Kunststoffwasserführung 7 strömen kann. In der Offenstellung wird der zweite Ventilkörper 51 von dem zweiten Ventilsitz 53 abgehoben, sodass das Kaltwasser von dem Kaltwassereinlass 13 über die zweite Kunststoffwasserführung 7 zu der dritten Kunststoffwasserführung 14 strömen kann.

Das Warmwasser und Kaltwasser können sich in der dritten Kunststoffwasserführung 14 zu Mischwasser mischen und über eine in der dritten Kunststoffwasserführung 14 ausgebildeten Ablauföffnung 56 in den in der Fig. 1 gezeigten Ablauf 5 strömen. Durch die erste Kunststoffwasserführung 6, zweite Kunststoffwasserführung 7 und dritte Kunststoffwasserführung 14 sind das Warmwasser und Kaltwasser ohne Kontakt zu dem Armaturengehäuse 2 durch das Armaturengehäuse 2 führbar. Die dritte Kunststoffwasserführung 14 ist zwischen der ersten Kunststoffwasserführung 6 und zweiten Kunststoffwasserführung 7 angeordnet. Die dritte Kunststoffwasserführung 14 ist in einem zentralen Bereich des Armaturengehäuses 2 angeordnet. Nach der Montage des Warmwasserventils 8 und des Kaltwasserventils 9 sind die erste Kunststoffwasserführung 6 und die zweite Kunststoffwasserführung 7 nicht mehr zueinander verstellbar.

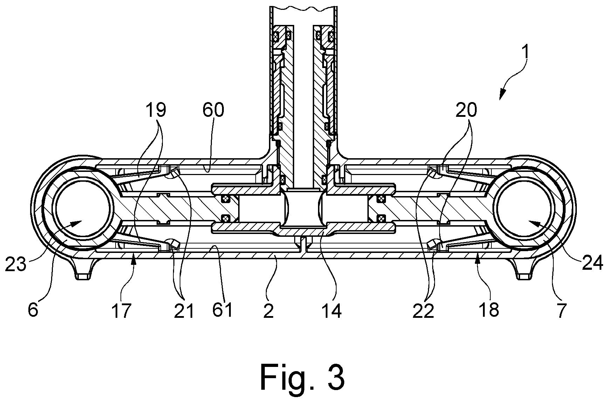

Die Fig. 3 zeigt die Sanitärarmatur 1 in einer zweiten Schnittdarstellung entlang der in der Fig. 2 gezeigten Schnittlinie III-III. Die erste Kunststoffwasserführung 6 weist eine erste Lagesicherung 17 und die zweite Kunststoffwasserführung 7 eine zweite Lagesicherung 18 auf. Die erste Lagesicherung 17 umfasst zwei erste Haken 19 und die zweite Lagesicherung 18 zwei zweite Haken 20. Die ersten Haken 19 erstrecken sich von der ersten Aufnahme 23 nach Art von Schnapphaken zu gegenüberliegenden Innenseiten 60, 61 des Armaturengehäuses 2. Die zweiten Haken 20 erstrecken sich von der zweiten Aufnahme 24 nach Art von Schnapphaken zu den gegenüberliegenden Innenseiten 60, 61 des Armaturengehäuses 2. An den Innenseiten 60, 61 sind sich gegenüberliegende erste Rastkonturen 21 für die ersten Haken 19 und zweite Rastkonturen 22 für die zweiten Haken 20 ausgebildet. Die Rastkonturen 21, 22 weisen jeweils eine Rampengeometrie auf, sodass die Haken 19, 20 beim Herausziehen der ersten Kunststoffwasserführung 6 und zweiten Kunststoffwasserführung 7 aus der dritten Kunststoffwasserführung 14 über die Rastkonturen 21, 22 gleiten können und anschließend gegen die Innenseiten 60, 61 des Armaturengehäuses 2 schnappen. Die Rastkonturen 21, 22 weisen jeweils eine Anschlagsfläche für die Haken 19, 20 auf, durch die ein ungewolltes Verstellen der ersten Kunststoffwasserführung 6 und zweiten Kunststoffwasserführung 7 zurück in die dritte Kunststoffwasserführung 14 verhinderbar sind. Hierdurch können die erste Kunststoffwasserführung 6 und die zweite Kunststoffwasserführung 7 in Positionen in dem Armaturengehäuse 2 gehalten werden, in denen die erste Aufnahme 23 der ersten Kunststoffwasserführung 6 mit der in der Fig. 2 gezeigten Warmwasserventilaufnahme 48 des Armaturengehäuses 2 und die zweite Aufnahme 24 der zweiten Kunststoffwasserführung 7 mit der in der Fig. 2 gezeigten Kaltwasserventilaufnahme 49 des Armaturengehäuses 2 fluchten. Hierdurch wird eine Montage des in der Fig. 2 gezeigten Warmwasserventils 8 und Kaltwasserventils 9 erleichtert.

Durch die vorliegende Erfindung ist eine Variantenvielfalt der Kunststoffwasserführungen 6, 7 reduzierbar.

### Bezugszeichenliste

- 1: Sanitärarmatur
- 2: Armaturengehäuse
- 3: Warmwasserzulauf
- 4: Kaltwasserzulauf
- 5: Ablauf
- 6: erste Kunststoffwasserführung
- 7: zweite Kunststoffwasserführung
- 8: Warmwasserventil
- 9: Kaltwasserventil
- 10: erste Abstand
- 11: zweiter Abstand
- 12: Warmwassereinlass
- 13: Kaltwassereinlass
- 14: dritte Kunststoffwasserführung
- 15: erste Schiebeverbindung
- 16: zweite Schiebeverbindung
- 17: erste Lagesicherung
- 18: zweite Lagesicherung
- 19: erster Haken
- 20: zweiter Haken
- 21: erste Rastkontur
- 22: zweite Rastkontur
- 23: erste Aufnahme
- 24: zweite Aufnahme
- 25: Auslauföffnung
- 26: Umgebung
- 27: Warmwasserzulauflängsachse
- 28: Kaltwasserzulauflängsachse
- 29: Rückseite
- 30: Warmwassereinlasslängsachse
- 31: Warmwasserauslass
- 32: Warmwasserauslasslängsachse
- 33: Warmwasserauslassrohr
- 34: Kaltwassereinlasslängsachse
- 35: Kaltwasserauslass
- 36: Kaltwasserauslasslängsachse
- 37: Kaltwasserauslassrohr
- 38: ersten Wasserführungsaufnahme
- 39: zweite Wasserführungsaufnahme
- 40: erster Außendurchmesser
- 41: zweiter Außendurchmesser
- 42: erster Innendurchmesser
- 43: zweiter Innendurchmesser
- 44: erste Anschlag
- 45: zweiter Anschlag
- 46: erste Umfangsfläche
- 47: zweite Umfangsfläche
- 48: Warmwasserventilaufnahme
- 49: Kaltwasserventilaufnahme
- 50: erster Ventilkörper
- 51: zweiter Ventilkörper
- 52: erster Ventilsitz
- 53: zweiter Ventilsitz
- 54: erstes Betätigungselement
- 55: zweites Betätigungselement
- 56: Ablauföffnung
- 57: Warmwasseranschluss
- 58: Kaltwasseranschluss
- 59: Deckel
- 60: erste Innenseite
- 61: zweite Innenseite

## Patentansprüche

1. Sanitärarmatur (1), zumindest aufweisend:
- ein Armaturengehäuse (2) mit einem Warmwasserzulauf für Warmwasser (3), einem Kaltwasserzulauf (4) für Kaltwasser und zumindest einem Ablauf (5);
- eine erste Kunststoffwasserführung (6), mit der das Warmwasser ohne Kontakt zu dem Armaturengehäuse (2) zumindest teilweise von dem Warmwasserzulauf (3) zu dem zumindest einen Ablauf (5) führbar ist;
- eine zweite Kunststoffwasserführung (7), mit der das Kaltwasser ohne Kontakt zu dem Armaturengehäuse (2) zumindest teilweise von dem Kaltwasserzulauf (4) zu dem zumindest einen Ablauf (5) führbar ist;
- ein Warmwasserventil (8), das zumindest teilweise in der ersten Kunststoffwasserführung (6) angeordnet ist;
- ein Kaltwasserventil (9), das zumindest teilweise in der zweiten Kunststoffwasserführung (7) angeordnet ist;
wobei die erste Kunststoffwasserführung (6) und die zweite Kunststoffwasserführung (7) verstellbar zueinander ausgebildet sind, sodass diese an einen ersten Abstand (10) zwischen dem Warmwasserzulauf (3) und Kaltwasserzulauf (4) anpassbar sind.

2. Sanitärarmatur (1) nach Patentanspruch 1, wobei ein zweiter Abstand (11) zwischen einem Warmwassereinlass (12) der ersten Kunststoffwasserführung (6) und einem Kaltwassereinlass (13) der zweiten Kunststoffwasserführung (7) an den ersten Abstand (10) anpassbar ist.

3. Sanitärarmatur (1) nach Patentanspruch 2, wobei der Warmwassereinlass (12) mit dem Warmwasserzulauf (3) oder der Kaltwassereinlass (13) mit dem Kaltwasserzulauf (4) fluchtet.

4. Sanitärarmatur (1) nach einem der vorhergehenden Patentansprüche, aufweisend eine dritte Kunststoffwasserführung (14), mit der das Warmwasser und das Kaltwasser zumindest teilweise zu dem zumindest einen Ablauf (5) führbar sind, wobei die erste Kunststoffwasserführung (6) über eine erste Schiebeverbindung (15) mit der dritten Kunststoffwasserführung (14) und die zweite Kunststoffwasserführung (7) über eine zweite Schiebeverbindung (16) mit der dritten Kunststoffwasserführung (14) verbunden sind.

5. Sanitärarmatur (1) nach einem der vorhergehenden Patentansprüche, wobei die erste Kunststoffwasserführung (6) zumindest eine erste Lagesicherung (17) oder die zweite Kunststoffwasserführung (7) zumindest eine zweite Lagesicherung (18) aufweist.

6. Sanitärarmatur (1) nach Patentanspruch 5, wobei die zumindest eine erste Lagesicherung (17) oder die zumindest eine zweite Lagesicherung (18) nach Art zumindest eines Hakens (19, 20) ausgebildet ist.

7. Sanitärarmatur (1) nach Patentanspruch 5 oder 6, wobei das Armaturengehäuse (2) zumindest eine erste Rastkontur (21) für die zumindest eine erste Lagesicherung (17) oder zumindest eine zweite Rastkontur (22) für die zumindest eine zweite Lagesicherung (18) aufweist.

8. Sanitärarmatur (1) nach einem der vorhergehenden Patentansprüche, wobei die erste Kunststoffwasserführung (6) eine erste Aufnahme (23) für das Warmwasserventil (8) oder die zweite Kunststoffwasserführung (7) eine zweite Aufnahme (24) für das Kaltwasserventil (9) aufweist.

9. Sanitärarmatur (1) nach einem der vorhergehenden Patentansprüche, wobei sich das Warmwasserventil (8) durch das Armaturengehäuse (2) in die erste Kunststoffwasserführung (6) oder sich das Kaltwasserventil (9) durch das Armaturengehäuse (2) in die zweite Kunststoffwasserführung (7) erstreckt.

10. Sanitärarmatur (1) nach einem der vorhergehenden Patentansprüche, wobei die erste Kunststoffwasserführung (6) und die zweite Kunststoffwasserführung (7) spiegelsymmetrisch zueinander ausgebildet sind.
